# Europäisches Patentamt

## European Patent Office

## Office européen des brevets

(19)

(11) Veröffentlichungsnummer: **0 296 106 B1**

(12) **EUROPÄISCHE PATENTSCHRIFT**

(45) Veröffentlichungstag der Patentschrift: **02.03.94**

(51) Int. Cl.5: **C09B 67/08**, C08K 9/02,
//C09D7/12,C09D11/02

(21) Anmeldenummer: **88810372.8**

(22) Anmeldetag: **07.06.88**

(54) **Mit über Ethylcellulose fixierten Metalloxiden beschichtete organische Pigmente.**

(30) Priorität: **16.06.87 CH 2257/87**

(43) Veröffentlichungstag der Anmeldung:
**21.12.88 Patentblatt 88/51**

(45) Bekanntmachung des Hinweises auf die
Patenterteilung:
**02.03.94 Patentblatt 94/09**

(84) Benannte Vertragsstaaten:
**CH DE FR GB IT LI**

(56) Entgegenhaltungen:
**EP-A- 0 025 993
DE-B- 1 234 195
US-A- 3 242 051**

(73) Patentinhaber: **CIBA-GEIGY AG
Klybeckstrasse 141
CH-4002 Basel(CH)**

(72) Erfinder: **Bugnon, Philippe, Dr.
La Chenalyete
CH-1724 Essert(CH)**
Erfinder: **Medinger, Bernhard, Dr.
Grottenweg
CH-1711 Giffers(CH)**

Rank Xerox (UK) Business Services
(3.10/3.09/3.3.3)

**Beschreibung**

Die vorliegende Erfindung betrifft organische Pigmente, deren Teilchenoberfläche mit einem festhaftenden, über eine Ethylcellulose-Zwischenschicht fixierten Ueberzug aus Metalloxiden versehen ist. Sie zeichnen sich durch hervorragende Eigenschaften, insbesondere durch ein sehr gutes rheologisches Verhalten, aus.

Die Beschichtung von festen Materialien mit einer Metalloxid-Schutzschicht, insbesondere aus Silicium- und/oder Aluminiumoxid, ist allgemein bekannt und beispielsweise in den US-Patenten 2 885 366 und 3 485 658 beschrieben. In der ersten der obengenannten Patentschriften wird z.B. die Beschichtung von Rutil mit Siliciumoxid spezifisch erwähnt. Dass durch Beschichtung der Teilchenoberfläche von anorganischen Pigmenten, insbesondere Bleichromaten, mit Siliciumoxid, gegebenenfalls in Kombination mit Aluminiumoxid, deren Eigenschaften verbessert werden können ist z.B. aus den US-Patenten 3 370 971, 3 470 007 und 3 639 133 bekannt. Wie aus den Japanischen Offenlegungsschriften 75/51527, 76/74039 und 79/160433 hervorgeht, wurden auch organische Pigmente mit Siliciumoxid beschichtet. Die damit erzielten Resultate sind allerdings nicht immer befriedigend, denn insbesondere in Lösungsmttelsystemen, wie z.B. Lacken, werden diese Beschichtungen leicht abgelöst.

Aus dem US-Patent 3 826 670 sind organische Pigmente bekannt, die mit hydrierten Metalloxiden beschichtet sind, welche über Metallsalze von Homo- oder Copolymeren von $\alpha,\beta$-ethylenisch-ungesättigten Carbonsäuren fixiert sind. Auch diese Präparate vermögen nicht ganz zu befriedigen, da z.B. die Farbstärke des Pigments dabei in bedeutendem Masse herabgesetzt wird.

Es ist nun gefunden worden, dass die obenerwähnten, den bisher bekannten Pigmentzusammensetzungen dieser Art anhaftenden Nachteile überraschenderweise beseitigt werden können und dass organische Pigmente mit einem festhaftenden Ueberzug aus Silicium- oder Aluminiumoxid mit ausgezeichneten Eigenschaften, insbesondere bezüglich Farbstärke und rheologischen Verhaltens, erhalten werden können, wenn der genannte Ueberzug über eine Ethylellulose-Zwischenschicht an die Teilchenoberfläche des Pigments fixiert wird.

Die vorliegende Erfindung betrifft demnach Stoffzusammensetzungen enthaltend ein mit Metalloxiden beschichtetes organisches Pigment, dadurch gekennzeichnet, dass die Teilchenoberfläche des Pigments mit einem festhaftenden, durchgehenden, hochvernetzten Ueberzug aus Silicium- und/oder Aluminiumoxid versehen ist, welcher durch Polykondensation eines Silicates und/oder Aluminates mit den freien Hydroxylgruppen einer die Teilchenoberfläche durchgehend umhüllenden Schicht aus Ethylcellulose fixiert wird.

Im Falle eines Ueberzuges mit Siliciumoxid erfolgt die Polykondensation mit Silicaten über die sogenannte "aktive Kieselsäure", deren Beschaffenheit und Herstellung z.B. in den US-Patenten 3 370 971 und 3 639 133 beschrieben ist. Bevorzugt geht man von handelsüblichem Na-Wasserglas aus.

Im Falle eines Ueberzuges mit Aluminiumoxid erfolgt die Polykondensation über in situ aus einem Aluminat gebildetes Aluminiumoxid. Letzteres kann z.B. direkt aus einem wasserlöslichen Na-, K- oder Mg-Aluminat in Gegenwart von verdünnter Mineralsäure, bei einem pH-Wert zwischen 5 und 10, oder aus wässrigem Aluminiumsulfat, durch Einstellung des pH-Wertes zwischen 5 und 7, erhalten werden.

Bei Verwendung eines Aluminats erhält man bei pH 5-7 dichtes, weitgehend amorphes Aluminiumoxid (sogenanntes "dense alumina") und bei pH 7-10 weitgehend kristallines Aluminiumoxid (sogenanntes "Boehmit").

Es kann auch sowohl eine $SiO_2$- als auch eine $Al_2O_3$-abgebende Substanz (ausgewählt aus den oben beschriebenen) oder ein Gemisch von beiden eingesetzt werden und damit ein gemischter Ueberzug aus Silicium-und Aluminiumoxid gebildet werden.

Alle üblichen organischen Pigmente, wie beispielsweise Azopigmente, Chinacridone, Phthalocyanine, Indanthrone, Flavanthrone, Pyranthrone, Perylene, Dioxazine, Perinone, Thioindigo, Chinophthalone und insbesondere Diketo-pyrrolopyrrole, Isoindoline, Isoindolinone und Metallkomplexe, eignen sich zur Herstellung der erfindungsgemässen Stoffzusammensetzungen, die beispielsweise wie nachstehend beschrieben erfolgt:

Das organische Pigment wird nach üblichen Methoden in einem Niederalkylalkohol (z.B. Methyl-, Ethyl-, n-Propyl-, Isopropyl-, n-Butyl-, sec.-Butyl, tert.-Butyl- oder Amylalkohol) dispergiert. Der so erhaltenen Suspension fügt man zweckmässig 1-20, bevorzugt 4-12 Gew.%, bezogen auf das Pigment, Ethylcellulose in Pulverform oder in Lösung zu (wenn gelöst, dann zweckmässig im gleichen Lösungsmittel, in welchem das Pigment dispergiert ist). Das Gemisch wird im allgemeinen mindestens eine Stunde bei Temperaturen zwischen 20 und 50°C gerührt. Danach wird das Produkt abfiltriert und mit Alkohol (zweckmässig demselben der Dispersion) und Wasser gewaschen.

Das so erhaltene wasserfeuchte Produkt wird in Wasser suspendiert. Man kann aber auch, ohne das Produkt zu isolieren, die Suspension einfach mit mindestens der gleichen Menge Wasser verdünnen.

Die Suspension wird anschliessend unter Rühren auf 60-100°C erhitzt und mit 0,5-50, bevorzugt 1-25 und besonders bevorzugt 2-12 Gew.-%, bezogen auf das Pigment, aktiver Kieselsäure oder in situ gebildetem Aluminiumoxid versetzt. Es wird 2 bis 4 Stunden weitergerührt, dann neutralisiert und abfiltriert. Der Rückstand wird mit Wasser gewaschen und im Vakuumtrockenschrank bei 80-120°C getrocknet.

Aktive Kieselsäure erhält man beispielsweise dadurch, dass man die auf 60-100°C erwärmte Suspension durch Zugabe einer Base auf pH 7-10 einstellt und dann langsam innerhalb einer Stunde miteinander Na-Wasserglas und Schwefelsäure in der gewünschten Menge zufügt und dabei darauf achtet, dass der pH immer im alkalischen Bereich liegt.

In situ gebildetes $Al_2O_3$ erhält man z.B. dadurch, dass man in die auf 60-100°C erwärmte Suspension langsam entweder eine Natriumaluminat-Lösung bis zum pH 5-9 zugibt und den pH durch Zugabe von Schwefelsäure konstant hält, oder eine Aluminiumsulfat-Lösung bis zum pH 5-7 hinzufügt, und den pH durch Zugabe einer Base in diesem Bereich hält.

Als Basen zum Einstellen des pH-Wertes kommen zweckmässig anorganische sowie organische Verbindungen, z.B. Natronlauge, Kalilauge, Ammoniak, Natriumalkoholat, Kaliumalkoholat oder Pyridin in Frage.

Die erfindungsgemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material kann man die erfindungsgemässen Stoffzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie z.B. hohe Transparenz, gute Ueberlackier-, Migrations-, Hitze-, Licht- und Wetterbeständigkeit aus.

Die erfindungsgemässen Stoffzusammensetzungen zeichnen sich aber ganz besonders durch eine hohe Farbstärke, durch ein hervorragendes rheologisches Verhalten in Lack- und Druckfarbensystemen, durch hohen Glanz und ausgezeichnetes "DOI" (= distinctness of image) der damit erhaltenen Lackierungen und durch weitgehende Verzugsfreiheit der damit pigmentierten Kunststoff-Formteile aus.

3

Infolge der guten rheologischen Eigenschaften der erfindungsgemässen Stoffzusammensetzungen ist es möglich, Lacke hoher Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung. Sofern nichts anderes vermerkt, bedeuten Prozente Gewichtsprozente.

Beispiel 1:

20 g des Isoindolinonpigments Pigment Gelb 110 werden in 200 ml Isopropanol nach üblicher Methode dispergiert. Zu der auf 50°C erwärmten Dispersion werden 2 g Ethylcellulose gegeben und 16 Stunden gerührt. Man fügt dann 300 ml Wasser hinzu. Zu der Suspension werden noch 4 g $Na_2SO_4$ gegeben, die Temperatur wird auf 80°C erhöht, und der pH wird durch Zugabe von 1n NaOH von 6,9 auf 9,5 eingestellt. Danach werden gleichzeitig 3,8 g Na-Wasserglas (26,5 % $SiO_2$), in 60 ml Wasser verdünnt (= 5 % $SiO_2$ bezogen auf Pigment), und 24 ml 0,2M $H_2SO_4$, in 60 ml Wasser verdünnt, zugegeben. Der pH bleibt bei ~ 9,5 konstant. Die Suspension wird zwei Stunden weitergerührt, ihr pH wird auf 8,0 erniedrigt, dann wird wieder eine halbe Stunde gerührt. Nach dem Abkühlen auf Raumtemperatur wird das Produkt filtriert, mit Wasser gewaschen und in einem Vakuumschrank bei 80°C getrocknet.

Beispiel 2:

Beispiel 1 wird wiederholt mit der Ausnahme, dass anstelle von C.I. Pigment Gelb 110 die gleiche Menge des Metallkomplexpigments C.I. Pigment Gelb 129 und anstelle von 2 g 0,8 g Ethylcellulose verwendet werden.

Beispiel 3:

Beispiel 1 wird wiederholt mit der Ausnahme, dass anstelle von C.I. Pigment Gelb 110 die gleiche Menge des Diketo-Pyrrolopyrrolpigments C.I. Pigment Rot 255 verwendet wird.

Beispiel 4:

Beispiel 1 wird wiederholt mit der Ausnahme, dass anstelle von C.I. Pigment Gelb 110 die gleiche Menge des Cu-Phthalocyaninpigments C.I. Pigment Blau 15:3 verwendet wird.

Beispiel 5:

a) 150 g C.I. Pigment Gelb 110 werden wie in Beispiel 1 beschrieben in 2000 ml Isopropanol dispergiert. Zu der auf 50°C erwärmten Dispersion werden unter Rühren 15 g Ethylcellulose gegeben. Anschliessend lässt man auf Raumtemperatur abkühlen und rührt 16 Stunden nach. Das Produkt wird dann filtriert, mit Isopropanol und Wasser gewaschen, wieder in 1850 ml Wasser eingerührt und nach üblicher Methode dispergiert.

b) 133 g der Dispersion aus a) werden auf 85-90°C erwärmt. Der pH wird auf 9 eingestellt. Innerhalb einer Stunde wird 1 g Na-Wasserglas (26,5 % $SiO_2$) in 50 ml Wasser verdünnt (= 1,5 % $SiO_2$ bezogen auf Pigment) zugegeben. Der pH steigt bis auf 9,8. Die Suspension wird eine Stunde weitergerührt. Dann wird der pH auf 8,5 eingestellt und die Temperatur auf 65°C erniedrigt. Innerhalb 30 Minuten werden 20 ml einer 1%-igen wässrigen Lösung von $NaAlO_2$ (= 0,25 % $Al_2O_3$ bezogen auf Pigment) zugegeben wobei man den pH verdünnter $H_2SO_4$ bei 8,5 konstant hält. Die Suspension wird noch eine Stunde bei 60°C gerührt. Nach dem Abkühlen auf Raumtemperatur wird das so beschichtete Pigment wie in Beispiel 1 beschrieben aufgearbeitet.

Beispiel 6:

133 g der Dispersion aus Beispiel 5a) werden auf 60°C erwärmt. Der pH wird auf 3,0 eingestellt. Innerhalb 2 Stunden werden 20 ml einer 1%-igen Lösung von $NaAlO_2$ (= 0,25 % $Al_2O_3$ bezogen auf Pigment) in 50 ml Wasser zugegeben. Der pH steigt bis 8,5 und wird durch Zugabe von 0,2M $H_2SO_4$ bei diesem Wert konstant gehalten. Man rührt 15 Minuten weiter, dann stellt man den pH auf 5,7 ein und gibt erneut 20 ml der 1%-igen Lösung von $NaAlO_2$ (= 0,25 % $Al_2O_3$ bezogen auf Pigment) in 50 ml Wasser und 10 ml 0,2M $H_2SO_4$ in 50 ml Wassser zu, wobei der pH bei ~ 5,7 konstant bleibt. Die Suspension wird eine Stunde weitergerührt. Nach dem Abkühlen auf Raumtemperatur wird das so beschichtete Pigment wie in Beispiel 1 beschrieben aufgearbeitet.

Beispiel 7:

133 g der Dispersion aus Beispiel 5a) werden auf 60°C erwärmt. Der pH wird auf 5,7 eingestellt. Innerhalb einer Stunde wird bei konstant gehaltenem pH 1 g $NaAlO_2$ (= 1,25 % $Al_2O_3$ bezogen auf Pigment), in 100 ml Wasser gelöst, zugegeben. Die Suspension wird 3 Stunden weiter gerührt. Der pH wird auf 8,5 erhöht und die Suspension während 15 Minuten gerührt. Nach dem Abkühlen wird das Produkt abfiltriert, mit Wasser gewaschen und bei 80°C im Vakuumschrank getrocknet.

Beispiel 8:

10 g des Isoindolinonpigments C.I. Pigment Gelb 110 werden in 100 ml einer 1%-igen Ethylcelluloselösung in Isopropanol während 16 Stunden dispergiert. Man fügt dann 200 ml Wasser hinzu. Die Temperatur wird auf 80°C erhöht und der pH wird durch Zugabe von 1 n NaOH von ~ 6,0 auf 8,8 eingestellt. Innerhalb 30 Minuten werden gleichzeitig 3,3 g $Al_2(SO_4)_3 \cdot 18H_2O$ (= 5 % $Al_2O_3$ bezogen auf Pigment), in 50 ml Wasser gelöst, und eine 0,75 n NaOH-Lösung zugesetzt, wobei der pH zuerst auf 6,5 sinkt und dann konstant bleiben soll. Die Suspension wird danach drei Stunden lang bei 80-90°C gerührt. Nach dem Abkühlen auf Raumtemperatur wird das Produkt filtriert, mit Wasser gewaschen und in einem Vakuumtrokkenschrank bei 80°C getrocknet.

Anwendungsbeispiele 9-14

Zur Bestimmung des Fliessverhaltens werden die in der nachfolgenden Tabelle angegebenen erfindungsgemässen Stoffzusammensetzungen, sowie die entsprechenden unbehandelten Pigmente nach üblicher Methode in ein Alkyd-Lacksystem (®Setal 84, Kunstharzfabriek Synthesis B.V., Holland: Festkörpergehalt: 70 Gew.%) eingearbeitet.

Das Fliessverhalten der Lackanreibungen, welche 9 % Pigment und 40,5 % Gesamtfestkörper enthalten und deren Pigment/Bindemittel-Verhältnis 0,3 beträgt, wird mit einem HAAKE-Viskosimeter ®Rotovisco RV 12 ermittelt (Messtemperatur: 25°C; Mess-System: SV-SP; Scherbereich: D = 0-100 [l/s]). Zur einfachen Charakterisierung der Fliesskurven können aus optimalen Regressionskurven ermittelte Viskositätswerte bei D = 10 [l/s] und 100 [l/s] angegeben werden.

Niedrigere Werte bedeuten besseres Fliessverhalten.

| Beispiel | Stoffzusammensetzung | Viskositätswerte in mPa·s | |
|---|---|---|---|
| | | bei D=10 [1/s] | bei D=100 [1/s] |
| 9 | C.I. Pigment Gelb 110 + Ethylcellulose + SiO$_2$ (Beispiel 1) | 777 | 174 |
| 10 | C.I. Pigment Gelb 129 + Ethylcellulose + SiO$_2$ (Beispiel 2) | 878 | 156 |
| 11 | C.I. Pigment Rot 255 + Ethylcellulose + SiO$_2$ (Beispiel 3) | 267 | 94 |
| 12 | C.I. Pigment Blau 15:3 + Ethylcellulose + SiO$_2$ (Beispiel 4) | 813 | 213 |
| 13 | C.I. Pigment Gelb 110 + Ethylcellulose + SiO$_2$ + Al$_2$O$_3$ (Beispiel 5) | 860 | 165 |
| 14 | C.I. Pigment Gelb 110 + Ethylcellulose + Al$_2$O$_3$ (Beispiel 6) | 841 | 161 |

Die entsprechenden unbehandelten Pigmente ergeben die in der nachfolgenden Tabelle angegebenen Viskositätswerte.

| Pigment | Viskositätswerte in mPa·s | |
|---|---|---|
| | bei D=10 [1/s] | bei D=100 [1/s] |
| C.I. Pigment Gelb 110 | 1320 | 297 |
| C.I. Pigment Gelb 129 | 1628 | 369 |
| C.I. Pigment Rot 255 | 448 | 108 |
| C.I. Pigment Blau 15:3 | 1916 | 389 |

Anwendungsbeispiel 15

Zur Bestimmung des Fliessverhaltens des Pigments gemäss Beispiel 8 (C.I. Pigment Gelb 110 + Ethylcellulose + Al$_2$O$_3$) wird das Pigment ebenfalls nach üblicher Methode in ein Alkyd-Lacksystem (®Setal 84, Kunstharzfabriek Synthesis B.V., Holland; Festkörpergehalt: 70 Gew.%) eingearbeitet. Dasselbe wird auch mit dem entsprechenden unbehandelten Pigment gemacht. Die Lackanreibungen werden wie für die Beispiele 9-14 beschrieben zubereitet, enthalten aber 12 % anstatt 9 % Pigment und 54 % anstatt 40,5 % Gesamtfestkörper.

Für das Pigment gemäss Beispiel 8 erhält man folgende Viskositätswerte:

bei D = 10 [l/s]: 1885 mPa•s,

bei D = 100 [l/s]: 517 mPa•s.

Mit dem unbehandelten Pigment erhält man hingegen:

bei D = 10 [l/s]: 3782 mPa•s,

bei D = 100 [l/s]: 833 mPa•s.

## Patentansprüche

1. Stoffzusammensetzungen enthaltend ein mit Metalloxiden beschichtetes organisches Pigment, dadurch gekennzeichnet, dass die Teilchenoberfläche des Pigments mit einem festhaftenden, durchgehenden, hochvernetzten Ueberzug aus Silicium- und/oder Aluminiumoxid versehen ist, welcher durch Polykondensation eines Silicates und/oder Aluminates mit den freien Hydroxylgruppen einer die Teilchenoberfläche durchgehend umhüllenden Schicht aus Ethylcellulose fixiert wird.

2. Stoffzusammensetzungen gemäss Anspruch 1, dadurch gekennzeichnet, dass der Ueberzug aus Siliciumoxid besteht.

3. Stoffzusammensetzungen gemäss Anspruch 1, dadurch gekennzeichnet, dass der Ueberzug aus Siliciumoxid besteht und durch Verwendung von Na-Wasserglas erhalten wird.

4. Stoffzusammensetzungen gemäss Anspruch 1, dadurch gekennzeichnet, dass der Ueberzug aus Aluminium besteht.

5. Stoffzusammensetzungen gemäss Anspruch 1, dadurch gekennzeichnet, dass der Ueberzug aus Aluminiumoxid besteht und durch Verwendung von $NaAlO_2$ erhalten wird.

6. Stoffzusammensetzungen gemäss Anspruch 1, dadurch gekennzeichnet, dass der Ueberzug aus Silicium- und Aluminiumoxid besteht.

7. Stoffzusammensetzungen gemäss Anspruch 1, dadurch gekennzeichnet, dass Ethylcellulose in einer Menge von 1 bis 20 Gew.%, bezogen auf das Pigment, eingesetzt wird.

8. Stoffzusammensetzungen gemäss Anspruch 1, dadurch gekennzeichnet, dass Silicium- und/oder Aluminiumoxid in einer Menge von 0,5 bis 50 Gew.%, bezogen auf das Pigment, eingesetzt wird.

9. Stoffzusammensetzungen gemäss Anspruch 1, dadurch gekennzeichnet, dass als Pigment ein Diketopyrrolopyrrol-, ein Isoindolin-, ein Isoindolinon- oder ein Metallkomplexpigment enthalten ist.

10. Hochmolekulares organisches Material enthaltend eine Stoffzusammensetzung gemäss Anspruch 1.

## Claims

1. A composition containing an organic pigment coated with metal oxides, wherein the surface of the pigment particles is provided with a tenacious, continuous, highly crosslinked coating of silica and/or alumina which is fixed by polycondensation of a silicate and/or aluminate with the free hydroxyl groups of a layer of ethylcellulose that continuously coats the surface of the particles.

2. A composition according to claim 1, wherein the coating consists of silica.

3. A composition according to claim 1, wherein the coating consists of silica and is obtained by using sodium silicate.

4. A composition according to claim 1, wherein the coating consists of alumina.

**5.** A composition according to claim 1, wherein the coating consists of alumina and is obtained by using NaAlO$_2$.

**6.** A composition according to claim 1, wherein the coating consists of silica and alumina.

**7.** A composition according to claim 1, wherein ethylcellulose is employed in an amount of 1 to 20 % by weight, based on the pigment.

**8.** A composition according to claim 1, wherein silica and/or alumina is employed in an amount of 0.5 to 50 % by weight, based on the pigment.

**9.** A composition according to claim 1, wherein the pigment it contains is a diketopyrrolopyrrole, isoindoline, isoindolinone or metal complex pigment.

**10.** A high molecular weight organic material containing a composition according to claim 1.

**Revendications**

**1.** Compositions comprenant un pigment organique recouvert d'oxydes de métaux, qui sont caractérisées en ce que la surface des particules du pigment est pourvue d'un revêtement adhérent continu, fortement réticulé, d'oxyde de silicium et/ou d'aluminium, qui est fixé par polycondensation d'un silicate et/ou d'un aluminate avec les hydroxyles libres d'une couche d'éthylcellulose enrobant de façon continue la surface des particules du pigment.

**2.** Compositions selon la revendication 1, caractérisées en ce que le revêtement est formé d'oxyde de silicium.

**3.** Compositions selon la revendication 1, caractérisées en ce que le revêtement est formé d'oxyde de silicium et a été obtenu avec de l'orthosilicate de sodium.

**4.** Compositions selon la revendication 1, caractérisées en ce que le revêtement est formé d'oxyde d'aluminium.

**5.** Compositions selon la revendication 1, caractérisées en ce que le revêtement est formé d'oxyde d'aluminium et a été obtenu avec le composé NaAlO$_2$.

**6.** Compositions selon la revendication 1, caractérisées en ce que le revêtement est formé d'oxydes de silicium et d'aluminium.

**7.** Compositions selon la revendication 1, caractérisées en ce que la proportion d'éthylcellulose est de 1 à 20 % du poids du pigment.

**8.** Compositions selon la revendication 1, caractérisées en ce que la proportion d'oxyde de silicium et/ou d'oxyde d'aluminium est de 0,5 à 50 % du poids du pigment.

**9.** Compositions selon la revendication 1, caractérisées en ce que le pigment est un pigment de dicéto-pyrrolopyrrole, d'isoindoline, d'isoindolinone ou d'un complexe de métal.

**10.** Matières organiques macromoléculaires contenant une composition selon la revendication 1.